(19) **Europäisches Patentamt / European Patent Office / Office européen des brevets**

(11) **EP 3 601 781 B1**

(12) **FASCICULE DE BREVET EUROPEEN**

(45) Date de publication et mention
de la délivrance du brevet:
**28.04.2021 Bulletin 2021/17**

(21) Numéro de dépôt: **18711831.0**

(22) Date de dépôt: **26.02.2018**

(51) Int Cl.:
**F03B 13/16** *(2006.01)* **F03B 15/00** *(2006.01)*

(86) Numéro de dépôt international:
**PCT/EP2018/054700**

(87) Numéro de publication internationale:
**WO 2018/172019 (27.09.2018 Gazette 2018/39)**

(54) **PROCÉDÉ DE COMMANDE D'UN SYSTÈME HOULOMOTEUR AU MOYEN D'UNE LOI DE COMMANDE PROPORTIONNELLE INTÉGRALE**

STEUERUNGSMETHODE EINES WELLENKRAFTWERKS MITTELS EINEM PROPORTIONAL-INTEGRAL-REGELVERFAHREN.

CONTROL METHOD OF A WAVE ENERGY CONVERTER BY MEANS OF A PROPORTIONAL - INTEGRAL CONTROL LAW.

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.03.2017 FR 1752337**

(43) Date de publication de la demande:
**05.02.2020 Bulletin 2020/06**

(73) Titulaire: **IFP Energies nouvelles
92852 Rueil-Malmaison (FR)**

(72) Inventeurs:
• **TONA, Paolino
69007 Lyon (FR)**
• **NGUYEN, Hoai-Nam
69008 Lyon (FR)**

(74) Mandataire: **IFP Energies nouvelles
Département Propriété Industrielle
Rond Point de l'échangeur de Solaize
BP3
69360 Solaize (FR)**

(56) Documents cités:
**WO-A1-2007/137426**

• **RINGWOOD JOHN V ET AL: "Energy-Maximizing Control of Wave-Energy Converters: The Development of Control System Technology to Optimize Their Operation", IEEE CONTROL SYSTEMS, IEEE, USA, vol. 34, no. 5, 1 octobre 2014 (2014-10-01), pages 30-55, XP011558952, ISSN: 1066-033X, DOI: 10.1109/MCS.2014.2333253 [extrait le 2014-09-12]**
• **FRANCESCO FUSCO ET AL: "Short-Term Wave Forecasting for Real-Time Control of Wave Energy Converters", IEEE TRANSACTIONS ON SUSTAINABLE ENERGY, IEEE, USA, vol. 1, no. 2, 1 juillet 2010 (2010-07-01), pages 99-106, XP011328229, ISSN: 1949-3029, DOI: 10.1109/TSTE.2010.2047414**

**Description**

L'invention concerne le domaine des dispositifs pour convertir l'énergie des vagues en énergie électrique ou hydraulique.

Les ressources énergétiques renouvelables connaissent un fort intérêt depuis quelques années. Propres, gratuites et inépuisables, autant d'atouts majeurs dans un monde rattrapé par la diminution inexorable des ressources fossiles disponibles et prenant conscience de la nécessité de préserver la planète. Parmi ces ressources, l'énergie houlomotrice, source relativement méconnue au milieu de celles largement médiatisées comme l'éolien ou le solaire, contribue à la diversification indispensable de l'exploitation des énergies renouvelables. Les dispositifs, couramment appelés appareils "houlomoteurs", sont particulièrement intéressants, car ils permettent de produire de l'électricité à partir de cette source d'énergie renouvelable (l'énergie potentielle et cinétique des vagues), sans émission de gaz à effet de serre. Ils sont particulièrement bien adaptés pour fournir de l'électricité à des sites insulaires isolés.

Par exemple, les demandes de brevet FR 2876751, FR 2973448 et WO 2009/081042 décrivent des appareils pour capter l'énergie produite par le flot marin. Ces dispositifs sont composés d'un support flottant sur lequel est disposé un pendule monté mobile par rapport au support flottant. Le mouvement relatif du pendule par rapport au support flottant est utilisé pour produire de l'énergie électrique au moyen d'une machine de conversion de l'énergie (par exemple une machine électrique). La machine de conversion fonctionne en tant que générateur et en tant que moteur. En effet, pour fournir un couple ou une force qui entraîne le mobile, on fournit une puissance à la machine de conversion afin de le mettre en résonance avec les vagues (mode moteur). En revanche, pour produire un couple ou force qui résiste au mouvement du mobile, on récupère une puissance via la machine de conversion (mode générateur).

Le mouvement des moyens mobiles est donc contrôlé par la machine de conversion de l'énergie pour favoriser la récupération d'énergie. Afin d'optimiser l'énergie électrique récupérée par les systèmes houlomoteurs, différents procédés de commande de la machine de conversion ont été envisagés. Certains de ces procédés ne sont pas optimaux, car la prédiction de la houle n'est pas considérée. De plus, ces procédés ne prennent pas en compte les pertes énergétiques lors de la conversion de l'énergie dans le système houlomoteur. Par exemple, la demande de brevet FR 2973448 (WO 2012/131186) décrit un tel procédé.

La commande « PI » est une approche bien connue pour la commande des systèmes houlomoteurs. Par exemple, le document Ringwood, J.V.. Control optimisation and parametric design, dans Numerical Modelling of Wave Energy Converters: State-of-the art techniques for single WEC and converter arrays (M. Folly Ed.), Elsevier, 2016 décrit une telle approche. Des versions adaptatives par rapport à l'état de mer (c.-à-d. dont les paramètres varient par rapport à l'état de mer) ont été présentées dans la littérature, par exemple dans les documents suivants :

- Whittaker, T., Collier, D., Folley, M., Osterried, M., Henry, A., & Crowley, M. (2007, September). The development of Oyster-a shallow water surging wave energy converter. In Proceedings of the 7th European Wave and Tidal Energy Conference, Porto, Portugal (pp. 11-14).
- Hansen, Rico H and Kramer, Morten M., "Modelling and control of the Wavestar prototype". In: Proceedings of 2011 European Wave and Tidal Energy Conférence (2011)
- Hals, J., Faines, J. and Moan, T., "A Comparison of Selected Stratégies for Adaptive Control of Wave Energy Converters". In: J. Offshore Mech. Arct. Eng. 133.3 (2011)

Pour toutes ces méthodes, l'approche utilisée est le gain scheduling, ou pré programmation des gains : un jeu de gains ou paramètres optimaux (un gain pour la commande P, deux gains pour la commande PI) est calculé hors ligne, analytiquement ou numériquement, pour un ensemble d'états de mer, afin de remplir des cartographies (tableaux) de gains en fonction de l'état de mer. Pour les méthodes décrites dans ces documents, la mise à jour des gains PI s'effectue toujours à partir d'estimations moyennées, sur des fenêtres temporelles de plusieurs minutes (par exemple entre 10 et 30 minutes). Ces méthodes ne permettent donc pas d'adapter les gains « de vague à vague », c'est-à-dire à une fréquence qui est celle de la commande en temps réel (par exemple comprise entre 10 et 100 Hz, soit une période d'échantillonnage comprise entre 10 et 100 ms). Ainsi, le temps de réaction élevé de ces méthodes ne permet une commande optimale du système houlomoteur,, la puissance récupérée n'est donc pas optimale. De plus, ces méthodes ne permettent d'optimiser la puissance produite par la machine de conversion, car elles ne prennent pas en compte le rendement de la machine de conversion.

Pour pallier ces inconvénients, la présente invention propose un procédé de commande d'un système houlomoteur, dans lequel on estime la force exercée par la houle sur le moyen mobile du système houlomoteur, puis on détermine au moins une fréquence dominante de la force exercée par la houle sur le moyen mobile au moyen d'un filtre de Kalman sans parfum (de l'anglais « Unscented Kalman Filter » UKF), et on détermine la commande du système houlomoteur par une loi de commande PI à gains variables, dont les coefficients sont fonction de la fréquence dominante. Le procédé de commande selon l'invention permet d'adapter les coefficients (gains) des actions P, et I, automatiquement et en continu, à l'état de mer courant de manière à maximiser la puissance récupérable avec la structure de commande PI. Ceci est réalisé à travers une estimation en ligne, par filtrage UKF (Unscented Kalman Filter), de la fréquence dominante (ou des fréquences dominantes) du spectre de la houle.

**Le procédé selon l'invention**

L'invention concerne un procédé de commande d'un système houlomoteur qui convertit l'énergie de la houle en énergie électrique ou hydraulique, ledit système houlomoteur comportant au moins un moyen mobile en liaison avec une machine de conversion de l'énergie, et ledit moyen mobile effectuant un mouvement oscillatoire par rapport à ladite machine de conversion. Pour ce procédé, on réalise les étapes suivantes :

a) on mesure la position et/ou la vitesse et/ou l'accélération dudit moyen mobile ;
b) on estime la force exercée par la houle sur ledit moyen mobile au moyen de ladite mesure de ladite position et/ou de ladite vitesse dudit moyen mobile ;
c) on détermine au moins une fréquence dominante de la force exercée par ladite houle sur ledit moyen mobile au moyen d'un filtre de Kalman non parfumé ;
d) on détermine une valeur de commande de ladite force exercée par ladite machine de conversion sur ledit moyen mobile pour maximiser la puissance générée par ladite machine de conversion, au moyen d'une loi de commande proportionnelle intégrale PI à gains variables, dont les coefficients sont déterminés au moyen de ladite fréquence dominante de ladite force exercée par ladite houle sur ledit moyen mobile ; et
e) on commande ladite machine de conversion au moyen de ladite valeur de commande.

Selon un mode de réalisation, on détermine le coefficient de proportionnalité Kp de ladite loi de commande PI au moyen d'une courbe de résistance de charge optimale à partir de ladite fréquence dominante de ladite force exercée par ladite houle sur ledit moyen mobile.

Avantageusement, on détermine le coefficient intégral Ki de ladite loi de commande PI au moyen d'une courbe de réactance de charge optimale à partir de ladite fréquence dominante de ladite force exercée par ladite houle sur ledit moyen mobile.

De manière avantageuse, on détermine ladite résistance Rc de la charge optimale et ladite réactance Xc de charge optimale par résolution du problème d'optimisation suivant :

$$\min_{R_c, X_c} \left\{ -\frac{R_c}{(X_c + X_i)^2 + (R_c + R_i)^2} \left( \eta_p - \frac{\eta_n - \eta_p}{\pi} \left( \frac{X_c}{R_c} - \arctan\left(\frac{X_c}{R_c}\right) \right) \right) \right\} \text{ avec}$$

$$\begin{cases} R_i(\omega) = B_{pa}(\omega) \\ X_i(\omega) = \omega \left( M + M_\infty + M_{pa}(\omega) - \frac{K_{pa}}{\omega^2} \right) \end{cases}$$

$\omega$ la fréquence d'excitation, $B_{pa}(\omega)$ la résistance à la radiation dudit moyen mobile, M la masse dudit moyen mobile, $M_{pa}(\omega)$ la masse ajoutée et $M_\infty$ masse ajoutée à l'infini dudit moyen mobile, $K_{pa}$ la raideur hydrostatique dudit moyen mobile, $\eta_p$ le rendement moteur de ladite machine de conversion, et $\eta_{pn}$ le rendement générateur de ladite machine de conversion.

De prééfrence, lesdites courbes de résistance de charge optimale et/ou de réactance de charge optimale sont déterminées préalablement à la mise en œuvre des étapes du procédé.

Conformément à une mise en œuvre, on maximise ladite puissance générée par ladite machine de conversion en prenant en compte le rendement de ladite machine de conversion.

Selon une caractéristique, ladite loi de commande PI s'écrit par une équation du type : $f_u(t) = K_p v(t) + K_i p(t)$ avec $f_u(t)$ la commande de la force exercée par ladite machine de conversion sur ledit moyen mobile, v(t) la vitesse dudit moyen mobile, p(t) la position dudit moyen mobile, Kp le coefficient de proportionnalité de ladite loi de commande PI, et Ki le coefficient intégral de ladite loi de commande PI.

Conformément à un mode de réalisation, ladite loi de commande est une loi de commande proportionnelle intégrale dérivée PID à gains variables.

Avantageusement, ladite loi de commande proportionnelle intégrale dérivée PID s'écrit sous la forme :

$f_u(t) = K_p v(t) + K_i p(t) + K_d a(t)$ avec $f_u(t)$ la commande de la force exercée par la machine de conversion sur ledit moyen mobile, v(t) la vitesse dudit moyen mobile, p(t) la position dudit moyen mobile, a(t) l'accélération dudit moyen mobile, Kp le coefficient de proportionnalité de ladite loi de commande PID, Ki le coefficient intégral de ladite loi de commande PID, et Kd le coefficient dérivé de ladite loi de commande PID.

Selon une option de réalisation, on détermine la fréquence dominante de ladite force exercée par ladite houle sur ledit moyen mobile au moyen d'une modélisation de ladite force exercée par la houle sur ledit moyen mobile comme un signal sinusoïdal, ou comme la somme de deux signaux sinusoïdaux.

Selon une mise en œuvre de l'invention, on estime la position et/ou la vitesse dudit moyen mobile en utilisant un modèle dynamique qui représente l'évolution de la position et de la vitesse du moyen mobile.

De manière avantageuse, ledit modèle dynamique comporte un modèle de la force de radiation.

De préférence, ladite machine de conversion est une machine électrique ou une machine hydraulique.

**Présentation succincte des figures**

D'autres caractéristiques et avantages du procédé selon l'invention, apparaîtront à la lecture de la description ci-après d'exemples non limitatifs de réalisations, en se référant aux figures annexées et décrites ci-après.

La figure 1 illustre les étapes du procédé selon un mode de réalisation de l'invention.

La figure 2 illustre la détermination de la valeur de commande selon un mode de réalisation de l'invention.

La figure 3 illustre une modélisation du système houlomoteur et de sa commande.

La figure 4 illustre un système houlomoteur selon un exemple de réalisation.

La figure 5a illustre une courbe de résistance de charge optimale pour un premier exemple d'application.

La figure 5b illustre une courbe de réactance de charge optimale pour le premier exemple d'application.

La figure 6 illustre un spectre de l'une des vagues irrégulières pour le premier exemple d'application.

La figure 7 illustre une estimation de la fréquence dominante de la force de la vague au moyen du procédé de commande selon l'invention pour le premier exemple d'application.

La figure 8 illustre une estimation de l'amplitude de la force de la vague au moyen du procédé de commande selon l'invention pour le premier exemple d'application.

La figure 9 illustre une courbe comparative entre l'énergie récupérée par le procédé de commande selon l'invention et par un procédé de commande selon l'art antérieur pour le premier exemple d'application.

La figure 10 illustre un spectre d'une vague irrégulière pour un deuxième exemple d'application.

La figure 11 illustre une courbe comparative entre l'énergie récupérée par le procédé de commande selon l'invention et par un procédé de commande selon l'art antérieur pour le deuxième exemple d'application.

**Description détaillée de l'invention**

L'invention concerne un procédé de commande d'un système houlomoteur qui comprend au moins un moyen mobile (par exemple un flotteur) qui coopère avec au moins une machine de conversion de l'énergie (également appelée PTO de l'anglais « Power Take-Off »). Le moyen mobile effectue un mouvement oscillatoire par rapport à la machine de conversion, sous l'action des vagues (ou houle) et de la machine de conversion. La machine de conversion convertit l'énergie mécanique du mouvement du moyen mobile en énergie électrique. Dans ce but, la machine de conversion peut être une simple machine électrique ou un dispositif plus complexe qui inclut d'autres machines, comme une machine hydraulique. La machine de conversion peut être considérée comme l'actionneur par lequel le système de commande pilote le fonctionnement du système houlomoteur.

Notations

Au cours de la description, les notations suivantes sont utilisées :

$f_u$ : force exercée par la machine de conversion sur le moyen mobile,

- $f_{ex}$ : force exercée par la houle sur le moyen mobile,

- p : position du moyen mobile par rapport à son point d'équilibre.

- v : vitesse du moyen mobile.

- a : accélération du moyen mobile.

$\omega$ : fréquence du mouvement du moyen mobile.

- M : masse du moyen mobile.

- $Z_{pa}$ : impédance de radiation, il s'agit d'un paramètre, fonction de la fréquence et déterminé expérimentalement ou issu du calcul des coefficients hydrodynamiques du moyen mobile, qui permet de rendre compte du phénomène de radiation, selon lequel le mouvement du moyen mobile dans l'eau crée une vague radiée qui l'amortit (c'est-à-dire qui amortit le mouvement)

- $K_{pa}$ : coefficient de raideur hydrostatique.

- $B_{pa}$ : résistance de radiation, soit la partie réelle de l'impédance de radiation

- $M_{pa}$ : masse ajoutée, il s'agit d'un paramètre, fonction de la fréquence et déterminé expérimentalement, ou issu du calcul des coefficients hydrodynamiques du moyen mobile, qui permet de rendre compte du phénomène qui augmente la masse équivalente du moyen mobile, à cause des particules d'eau qui sont entrainées par son mouvement
- $M_\infty$ : masse ajoutée à fréquence infiniment élevée,
- $P_a$ : puissance moyenne générée par le système houlomoteur.
- $t$ : temps continu
- $s$ : variable de Laplace
- $k$ : temps discret
- $\eta$ : rendement de la conversion de l'énergie, avec

   ▪ $\eta_p$ : rendement moteur de la machine de conversion, il s'agit d'une donnée constructeur ou d'une donnée déterminée expérimentalement.
   ▪ $\eta_n$ : rendement générateur de la machine de conversion, il s'agit d'une donnée constructeur ou d'une donnée déterminée expérimentalement.

- $Z_i$ : impédance intrinsèque du moyen mobile du système houlomoteur, paramètre connu, fonction de la fréquence, issu de la modélisation du moyen mobile sur la base de la théorie linéaire des vagues, déterminé à partir des coefficients hydrodynamiques du moyen mobile et éventuellement de mesures expérimentales.
- $R_i$ : résistance intrinsèque du moyen mobile du système houlomoteur, soit la partie réelle de l'impédance intrinsèque
- $X_i$ : réactance intrinsèque du moyen mobile du système houlomoteur, soit la partie imaginaire de l'impédance intrinsèque
- $K_p$ : coefficient de proportionnalité de la loi de commande PI.
- $K_i$ : coefficient intégral de la loi de commande PI.
- $K_d$ : coefficient dérivé de la loi de commande PID.
- $Z_c$ : impédance de la loi de commande (ou de charge)
- $R_c$ : résistance de la loi de commande (ou de charge), avec

   ▪ $R_c^0$ résistance optimale pour un état de mer donné

- $X_c$ : réactance de la loi de commande, avec

   ▪ $X_c^0$ résistance optimale pour un état de mer donné

- A : amplitude de la houle
- $\hat{\omega}_{ex}$ : estimation de la fréquence dominante de la vague
- $\hat{f}_{ex}$ : estimation de la force exercée par la vague sur le moyen mobile
- $T_s$ : période d'échantillonnage
- $\phi$ : déphasage du signal
- $A_x$ : matrice du modèle d'état
- $C$ : matrice du modèle d'état
- $v(k)$ : bruit gaussien avec matrice de covariance Q
- $\mu(k)$ : bruit gaussien avec matrice de covariance R
- $P_x$ : matrice de covariance de x(k)

Pour ces notations, les valeurs estimées sont généralement marquées d'un accent circonflexe. Le temps est noté $t$ (variable continue), ou $k$ (variable discrète).

Dans la suite de la description et pour les revendications, les termes vagues, flots marins et houle sont considérés comme équivalents.

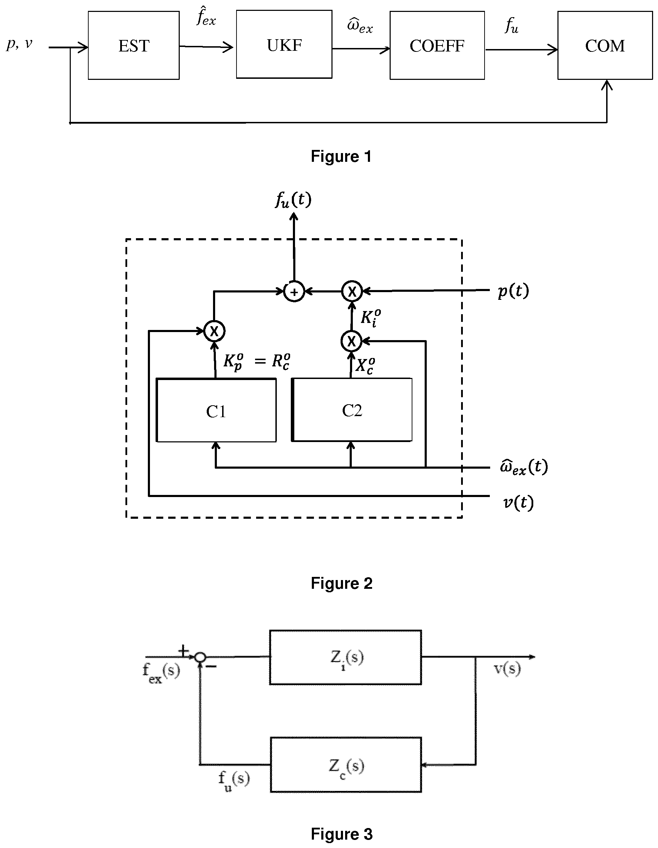

L'invention concerne un procédé de commande d'un système houlomoteur. La figure 1 représente les différentes étapes du procédé selon l'invention :

1. Mesure(s) de la position et/ou la vitesse du moyen mobile (p, v)
2. Estimation de la force exercée par les vagues (*EST*)
3. Détermination de la fréquence dominante (UKF)
4. Détermination de la valeur de commande (COEFF)
5. Commande de la machine de conversion (COM)

Les étapes 1 à 5 sont réalisées en temps réel, dans une boucle temps réel. Toutefois, selon un mode de réalisation de l'invention, la détermination de la valeur de commande peut comprendre un calcul préalable de courbes de résistance et de réactance de charge optimale.

De manière avantageuse, le procédé de commande selon l'invention peut être mis en œuvre par des moyens informatiques, par exemple un ordinateur. ou un processeur, en particulier un processeur embarqué.

Etape 1) Mesure(s) de la position et/ou la vitesse du moyen mobile (p,v)

Lors de cette étape, la position et/ou la vitesse du moyen mobile sont mesurées. La position correspond au mouvement (par exemple distance ou angle) par rapport à la position d'équilibre du moyen mobile. Ces mesures peuvent être réalisées au moyen de capteurs, généralement implémentés sur un système houlomoteur pour son contrôle et/ou sa supervision.

Selon une mise en œuvre de l'invention, lors de cette étape, on peut également mesurer ou estimer l'accélération du moyen mobile, car cette mesure ou estimation peut être utilisée dans les étapes suivantes du procédé selon l'invention. Par exemple, l'accélération peut être mesurée au moyen d'un accéléromètre placé sur le moyen mobile.

Etape 2) Estimation de la force exercée par la houle (EST)

Pour cette étape, on estime en temps réel la force exercée par la houle sur le moyen mobile. L'estimation de la houle est réalisée à partir des mesures disponibles (position et/ou vitesse et/ou accélération) obtenues à l'étape précédente. L'estimation de la force exercée par la houle sur le moyen mobile est réalisée en ligne et en temps réel, afin de pouvoir réaliser une commande en temps réel. Dans le but d'une commande ayant un temps de réponse optimal, on peut choisir une méthode d'estimation rapide.

Pour cette étape du procédé, tout type d'estimation de la force exercée par la houle sur le moyen mobile peut être envisagé.

Selon un mode de réalisation de l'invention, l'estimation de la force exercée par la houle sur le moyen mobile, peut être mise en œuvre au moyen d'un estimateur basé sur un modèle dynamique du système houlomoteur. Dans ce cas, on peut construire un modèle dynamique du système houlomoteur. Le modèle dynamique représente le comportement dynamique, traduisant le mouvement des éléments constituant le système houlomoteur sous l'action de la houle et sous l'action de la commande de force donnée à la machine de conversion. Le modèle dynamique est un modèle qui relie la vitesse du moyen mobile à la force exercée par les vagues sur le moyen mobile à la commande de force donnée à la machine de conversion qui est à son tour traduite en une force exercée par la dite machine de conversion sur le moyen mobile.

Conformément à un mode de réalisation de l'invention, le modèle de dynamique peut être obtenu par application du principe fondamental de la dynamique sur le moyen mobile du système houlomoteur. Pour cette application, on prend en compte notamment la force exercée par la houle sur le moyen mobile et la force exercée par la machine de conversion sur le moyen mobile.

Selon une mise en œuvre de l'invention, on peut considérer un système houlomoteur avec une partie flottante (moyen mobile) dont le mouvement oscillant de translation ou de rotation est contraint dans une seule dimension. On peut alors supposer que le mouvement de translation ou de rotation puisse être décrit par un modèle linéaire sous forme d'état qui inclut la dynamique du flotteur avec son interaction avec la houle et la dynamique du système de prise de puissance (PTO), ou machine de conversion, qui constitue l'actionneur du système.

Dans la suite de la description, seul un mouvement unidirectionnel est considéré pour le modèle dynamique. Toutefois, le modèle dynamique peut être développé pour un mouvement multidirectionnel.

Selon un exemple de réalisation, on peut estimer en temps-réel la force exercée par les vagues sur le moyen mobile en mettant en œuvre un procédé de détermination de la force d'excitation exercée par la houle incidente sur un moyen mobile d'un système houlomoteur au moyen d'un modèle de la force de radiation, tel que décrit dans la demande de brevet dont le numéro de dépôt est FR 16/53109. Pour rappel, la force de radiation est la force appliquée sur le moyen mobile et générée par le mouvement même du moyen mobile, contrairement à la force d'excitation de la houle qui est générée par la houle uniquement.

Etape 3) Détermination de la fréquence dominante

Lors de cette étape, on détermine au moins une fréquence dominante de la force exercée par la houle sur le moyen mobile (déterminée à l'étape précédente). On appelle fréquence dominante, la fréquence correspondante au pic (maximum) de son spectre. La fréquence dominante est déterminée au moyen d'un filtre de Kalman non parfumé (de l'anglais « unscented Kalman filter » UKF). Un filtre UKF est basé sur la théorie de la transformation « non parfumée », qui permet d'obtenir un estimateur pour un système non linéaire sans avoir besoin de le linéariser au préalable pour l'application du filtre. Le filtre UKF utilise une distribution statistique de l'état qui est propagée à travers les équations non linéaires. Un tel filtre présente l'avantage de permettre une stabilité, donc une robustesse de l'estimation.

Selon un mode de réalisation de l'invention, la force d'excitation de la vague est modélisée comme un signal sinusoïdal variant dans le temps :

$$f_{ex}(t) = A(t)\sin(\omega(t)t + \phi(t))$$

où $A(t)$, $\omega(t)$ et $\phi(t)$ sont respectivement l'amplitude, la fréquence et le déphasage du signal. Il s'agit d'une approximation, car cette force n'est pas en réalité une sinusoïde à paramètres variants. Dans la théorie linéaire des vagues, elle est plutôt modélisée comme une superposition de sinusoïdes à paramètres constants.

Alternativement, la force d'excitation de la vague peut être modélisée comme la somme de deux signaux sinusoïdaux variant dans le temps :

$$f_{ex}(t) = A_1(t)\sin(\omega_1(t) + \phi_1(t)) + A_2(t)\sin(\omega_2(t) + \phi_2(t))$$

Ces paramètres de la modélisation de la force d'excitation de la vague (variant dans le temps) sont à estimer. Puisqu'ils rentrent de manière non linéaire dans l'équation ci-dessus, il s'agit d'un problème d'estimation non linéaire.

La méthode du filtre de Kalman non parfumé (UKF, *Unscented Kalman Filter*, en anglais) est utilisée pour estimer $A(t)$, $\omega(t)$ et $\phi(t)$.

On note que d'autres méthodes d'estimations non linéaires pourraient, en principe, être utilisées pour réaliser cette étape tels que le filtre de Kalman étendu (EKF, *Extended Kalman Filter*) ou le filtre particulaire (*Particle Filter*), mais l'UKF donne des résultats particulièrement bons. L'utilisation du filtre EKF en particulier a été évoquée dans la littérature dans ce but. Cependant, le filtre EKF étant basé sur la linéarisation locale d'un modèle non linéaire, il ne donne pas les garanties de stabilité, et donc de robustesse, de l'estimation que donne l'UKF.

Pour appliquer l'UKF, on met d'abord l'équation modélisant la force d'excitation sous forme d'état et à temps discret.

Soit $T_s$ la période d'échantillonnage à laquelle le filtre devra tourner. La force d'excitation de la vague sera alors estimée au temps discret $t = kT_s$, $k = 0,1,2,...$, que l'on notera simplement $k$.

En définissant

$$\begin{cases} x_1(k) = A\sin(kT_s\omega + \phi), \\ x_2(k) = A\cos(kT_s\omega + \phi) \\ x_3(k) = \omega \end{cases}$$

et dans l'hypothèse que $\omega(k)$ change lentement dans le temps (par rapport à la période d'échantillonnage), on peut obtenir le modèle sous forme d'état suivant :

$$\begin{cases} \begin{bmatrix} x_1(k) \\ x_2(k) \\ x_3(k) \end{bmatrix} = \begin{bmatrix} \cos(T_s x_3(k-1)) & \sin(T_s x_3(k-1)) & 0 \\ -\sin(T_s x_3(k-1)) & \cos(T_s x_3(k-1)) & 0 \\ 0 & 0 & 1 \end{bmatrix} \begin{bmatrix} x_1(k-1) \\ x_2(k-1) \\ x_3(k-1) \end{bmatrix} + \begin{bmatrix} v_1(k-1) \\ v_2(k-1) \\ v_3(k-1) \end{bmatrix}, \\ f_{ex}(k) = \begin{bmatrix} 1 & 0 & 0 \end{bmatrix} \begin{bmatrix} x_1(k) \\ x_2(k) \\ x_3(k) \end{bmatrix} + \mu(k) \end{cases}$$

Dans ce modèle, des incertitudes ont été rajoutées pour prendre en compte les erreurs de modélisation. Plus particulièrement, $v_1(k-1)$ et $v_2(k-1)$ servent à pallier la nature variant dans le temps de $A(t)$, $\omega(t)$ et $\phi(t)$ qui n'est pas pris en compte dans la définition des états $x_1(k)$ et $x_2(k)$. $v_3(k-1)$ est une incertitude sur le troisième état (la fréquence à estimer), qui est naturellement corrélée avec $v_1(k-1)$ et $v_2(k-1)$. $\mu(k)$ est une incertitude que l'on peut assimiler à une erreur de mesure sur $f_{ex}(k)$, qui sert à prendre en compte le fait que $f_{ex}(k)$ n'est pas exactement une sinusoïde.

En notant

$$x(k) = [x_1(k) \quad x_2(k) \quad x_3(k)]^T,$$

$$v(k) = [v_1(k) \quad v_2(k) \quad v_3(k)]^T,$$

$$y(k) = f_{ex}(k)$$

et

$$\begin{cases} A_x = \begin{bmatrix} \cos(T_s x_3(k-1)) & \sin(T_s x_3(k-1)) & 0 \\ -\sin(T_s x_3(k-1)) & \cos(T_s x_3(k-1)) & 0 \\ 0 & 0 & 1 \end{bmatrix}, \\ C = [1 \quad 0 \quad 0] \end{cases}$$

les équations du modèle d'état s'écrivent :

$$\begin{cases} x(k) = A_x x(k-1) + v(k), \\ y(k) = Cx(k) + \mu(k) \end{cases}$$

On adopte les hypothèses suivantes :

- l'état initial $x(0)$ est un vecteur aléatoire de moyenne $m(0) = E[x(0)]$ et covariance $P(0) = E[(x(0) - m(0))(x(0) - m(0))^T]$ ;
- $v(k)$ et $\mu(k)$ sont des bruits gaussiens avec matrices de covariance $Q$ et $R$, respectivement ;

et les notations suivantes :

- $x(k|k-1)$ est l'estimation de $x(k)$ à partir des mesures jusqu'au temps $k-1$, soit $y(k-1)$, $y(k-2)$, ...
- $x(k|k)$ est l'estimation de $x(k)$ à partir des mesures jusqu'au temps $k$, soit $y(k)$, $y(k-1)$, ...
- $P_x(k|k-1)$ est la matrice de covariance de $x(k)$ à partir des mesures jusqu'au temps $k-1$, soit $y(k-1)$, $y(k-2)$, ...
- $P_x(k|k)$ est la matrice de covariance de $x(k)$ à partir des mesures jusqu'au temps $k$, soit $y(k)$, $y(k-1)$, ...

Il y a trois étapes dans la méthode UKF :

1. Calcul des points sigma

Dans cette première étape, on calcule un ensemble d'échantillons dans l'espace d'état, appelés points sigma, qui représentent bien la distribution probabiliste de l'état selon ses paramètres de moyenne et covariance.
Soient

$$W_0^m = \frac{\lambda}{n+\lambda},$$

$$W_0^c = \frac{\lambda}{n+\lambda} + (1 - \alpha^2 + \beta),$$

$$W_j^m = W_j^c = \frac{\lambda}{2(n+\lambda)}, \quad j = 1, 2, \dots, 2n$$

où $\lambda = (\alpha^2 - 1)n$ est un paramètre de mise à l'échelle, $\alpha$ est un paramètre qui détermine la diffusion des points sigma autour de $x(k-1|k-1)$ et auquel on donne généralement une petite valeur positive, par exemple $10^{-3}$, $\beta$ est un paramètre utilisé pour incorporer la connaissance a priori de la distribution de x : pour une distribution gaussienne, $\beta = 2$ est optimal.
Au temps $k-1$, on considère le choix suivant de points sigma (ensemble de points qui encodent de manière exacte les informations de moyenne et variance) :

$$x_0(k-1) = x(k-1|k-1),$$

$$x_i(k-1) = x(k-1|k-1) + \sqrt{n+\lambda}\, S_i(k-1), i = 1,2,\dots,n$$

$$x_{i+n}(k-1) = x(k-1|k-1) - \sqrt{n+\lambda}\, S_i(k-1), i = 1,2,\dots,n$$

où $S_i(k$ - $1)$ est la $i$-ème colonne de la racine carrée matricielle de $P_x(k$ - $1|k$ - $1)$, soit $P_x(k|k$ - $1) = S(k$ - $1)^T{}_S(k$ - $1)$

2. Mise à jour des prédictions

Chaque point sigma est propagé à travers le modèle non linéaire qui représente l'évolution des états :

$$x_j(k|k-1) = A_x x_j(k-1), \qquad j = 0, 1, \dots, 2n$$

La moyenne et la covariance de $\hat{x}(k|k$ - $1)$, la prédiction de $x(k|k$ - $1)$

$$\hat{x}(k|k-1) = \sum_{j=0}^{2n} W_j^m \hat{x}_j(k|k-1),$$

$$P_x(k|k-1) = \sum_{j=0}^{2n} W_j^c \left(\hat{x}_j(k|k-1) - x(k|k-1)\right)\left(\hat{x}_j(k|k-1) - x(k|k-1)\right)^T + Q.$$

Les états prédits $\hat{x}_j(k|k$ -$1)$ sont utilisés dans l'équation d'état de sortie, ce qui donne :

$$\hat{y}_j(k|k-1) = C\hat{x}_j(k|k-1)$$

La moyenne et la covariance de $\hat{y}(k|k$ - $1)$ sont calculées comme

$$\hat{y}(k|k-1) = \sum_{j=0}^{2n} W_j^m \hat{y}_j(k|k-1),$$

$$P_y(k|k-1) = \sum_{j=0}^{2n} W_j^c \left(\hat{y}_j(k|k-1) - y(k|k-1)\right)\left(\hat{y}_j(k|k-1) - y(k|k-1)\right)^T + R$$

tandis que la covariance croisée entre $\hat{x}(k|k$ - $1)$ et $\hat{y}(k|k$ - $1)$ est :

$$P_{xy}(k|k-1) = \sum_{j=0}^{2n} W_j^c \left(\hat{x}_j(k|k-1) - x(k|k-1)\right)\left(\hat{y}_j(k|k-1) - y(k|k-1)\right)^T$$

3. Mise à jour à partir des mesures

Comme dans le filtre de Kalman, l'estimation finale de l'état est obtenue en corrigeant la prédiction avec une rétroaction sur l'erreur de prédiction sur la sortie (mesurée) :

$$\hat{x}(k) = \hat{x}(k|k-1) + K\big(\hat{y}(k) - \hat{y}(k|k-1)\big)$$

où le gain K est donné par

$$K = P_{xy}(k|k-1)P_y(k|k-1)^{-1}$$

La covariance a posteriori de l'estimation est mise à jour avec la formule suivante :

$$P_x(k|k) = P_x(k|k-1) - KP_y(k|k-1)K^T$$

Etape 4) Détermination de la valeur de commande

Lors de cette étape, on détermine la valeur de commande de la force exercée par la machine de conversion sur le moyen mobile pour maximiser la puissance générée par la machine de conversion. Cette détermination est mise en œuvre au moyen d'une loi de commande proportionnelle intégrale à gains variables, dont les coefficients (les gains variables) sont déterminés en fonction de la fréquence dominante de la force exercée par la houle sur le moyen mobile.

Selon une mise en œuvre de l'invention, la loi de commande peut être une loi de commande de type proportionnelle intégrale dérivée à gains variables.

Conformément à un mode de réalisation, on peut écrire un modèle dynamique force-vitesse de ce type de système houlomoteur sous forme fréquentielle :

$$\left(j\omega M + Z_{pa}(j\omega) + \frac{K_{pa}}{j\omega}\right)v(j\omega) = f_{ex}(j\omega) - f_u(j\omega)$$

où :

- $v(j\omega)$ est la vitesse du moyen mobile ;
- $f_{ex}(j\omega)$ et $f_u(j\omega)$ sont la force d'excitation de la vague incidente et la force appliquée par la machine de conversion au moyen mobile, respectivement ;
- $M$ est la masse du moyen mobile (flotteur, par exemple) et de toutes les autres parties du système houlomoteur solidaires de ce moyen mobile ;
- $Z_{pa}(j\omega)$ est l'impédance de radiation ;
- $K_{pa}$ est la raideur hydrostatique.

Ce modèle est issu de l'équation intégro-différentielle de Cummins, et ses coefficients $K_{pa}$ et $Z_{pa}(j\omega)$ (et ceux qui sont issus de sa décomposition, ci-après) peuvent être calculés à l'aide de codes d'hydrodynamique basés sur la méthode des éléments frontières (BEM), tels que WAMIT, Diodore ou NEMOH. L'impédance de radiation $Z_{pa}(j\omega)$, qui, dans la théorie linéaire des vagues, décrit l'effet du mouvement libre du flotteur dans l'eau, est le résultat d'une approximation de la réponse impulsionnelle de radiation par un filtre à réponse impulsionnelle infinie. Elle peut être décomposée comme il suit :

$$Z_{pa}(j\omega) = B_{pa}(j\omega) + j\omega\big(M_{pa}(j\omega) + M_\infty\big)$$
$$= H_{pa}(j\omega) + j\omega M_\infty$$

où $B_{pa}(j\omega)$ est la résistance de radiation, $M_{pa}(j\omega)$ est la masse ajoutée après que la singularité à l'infini $M_\infty$ a été retirée et $H_{pa}(j\omega) = B_{pa}(j\omega) + j\omega M_{pa}(j\omega)$).

La vitesse du flotteur, en fonction des forces qui lui sont appliquées, peut se récrire :

$$v(j\omega) = \frac{1}{Z_j(j\omega)}\big(f_{ex}(j\omega) - f_u(j\omega)\big)$$

où l'impédance intrinsèque $Z_i(j\omega)$ est définie comme

$$Z_i(j\omega) = B_{pa}(\omega) + j\omega\left(M + M_\infty + M_{pa}(\omega) - \frac{K_{pa}}{\omega^2}\right)$$
$$= R_i(\omega) + jX_i(\omega)$$

où

$$\begin{cases} R_i(\omega) = B_{pa}(\omega) \\ X_i(\omega) = \omega \left( M + M_\infty + M_{pa}(\omega) - \dfrac{K_{pa}}{\omega^2} \right) \end{cases}$$

sont respectivement la résistance et la réactance (partie réelle et partie imaginaire de l'impédance) intrinsèques du système.

Lors de cette étape, on peut chercher à optimiser les performances de la loi de commande, en termes de maximisation de la puissance électrique produite en moyenne $P_a$ :

$$P_a = \frac{1}{T} \int_{t=0}^{T} \eta\, f_u(t) v(t) dt$$

où $\eta$ est un coefficient qui représente le rendement de la machine de conversion. Si $\eta = 1$, on considère la machine de conversion parfaite, sans pertes de conversion d'énergie. Bien que cette hypothèse soit peu réaliste, elle est souvent adoptée dans la littérature car elle simplifie grandement les calculs, en l'occurrence ceux des paramètres optimaux d'une loi de commande de type PI. Mais elle correspond à considérer que prélever de la puissance du réseau par la machine de conversion a le même coût que d'en délivrer, ce qui est en général faux et peut conduire à obtenir une production d'énergie électrique très inférieure à ce qui est attendu, voire à un gaspillage d'énergie du réseau ($P_a$ négative).

Selon une mise en œuvre, le rendement $\eta$ peut être considéré comme une fonction de la puissance instantanée $f_u v$, définie comme suit

$$\eta(f_u v) = \begin{cases} \eta_p \text{ si } f_u v \geq 0 \\ \eta_n \text{ si } f_u v < 0 \end{cases}$$

où les coefficients $0 < \eta_p \leq 1$ et $\eta_n \geq 1$ dépendent de la machine de conversion et peuvent même être une fonction de $f_u v$.

Cette étape consiste en une loi de commande PI pour le contrôle hydrodynamique d'un système houlomoteur :

$$f_u(t) = K_p v(t) + K_i p(t) = K_p v(t) + K_i \int_0^T v(\tau) d\tau$$

soit, dans le domaine de Laplace :

$$f_u(s) = K_p v(s) + \frac{K_i}{s} v(s), \qquad s = \sigma + j\omega$$

dont les paramètres $K_p$ et $K_i$ sont adaptés de manière continue, c'est-à-dire en ligne et en temps-réel, en fonction de la fréquence dominante estimée de la force d'excitation de la vague, de manière à garantir que la puissance électrique produite soit maximisée pour cette fréquence.

Alternativement, la loi de commande est une loi PID, qui peut s'écrire pour le contrôle d'un système houlomoteur :

$$f_u(t) = K_p v(t) + K_i p(t) + K_d a(t)$$

La maximisation de la puissance électrique produite se fait sur la base d'une expression analytique (originale) qui relie, fréquence par fréquence, cette puissance à la partie réelle (résistance) et à la partie imaginaire (réactance) de l'impédance réalisée par la loi de commande, dans l'hypothèse où la force appliquée par la machine de conversion est une rétroaction linéaire sur la vitesse du moyen mobile du système houlomoteur (cf. figure 3) :

$$f_u(s) = Z_c(s) v(s)$$

Ayant noté

$$\begin{cases} R_c = \text{Re}\{Z_c\} \\ X_c = \text{Im}\{Z_c\} \end{cases}$$

la résistance et la réactance de l'impédance de la loi de commande (ou de charge) à une fréquence donnée (la fréquence dominante de la force d'excitation de la vague), l'expression analytique de la puissance électrique à cette fréquence est :

$$P_a = \frac{A^2 R_c}{2((X_c + X_i)^2 + (R_c + R_i)^2)}\left(\eta_p - \frac{\eta_n - \eta_p}{\pi}\left(\frac{X_c}{R_c} - \arctan\left(\frac{X_c}{R_c}\right)\right)\right)$$

où $R_i$ et $X_i$ sont calculés à la fréquence en question à partir du modèle du système houlomoteur, le paramètre A peut être issu de l'estimation de la force de la vague (mais, comme montré ci-après, il n'est pas nécessaire de le calculer) et $R_c$ et $X_c$ sont à déterminer pour cette même fréquence en résolvant le problème d'optimisation suivant :

$$\min_{R_c, X_c} \left\{ -\frac{R_c}{(X_c + X_i)^2 + (R_c + R_i)^2}\left(\eta_p - \frac{\eta_n - \eta_p}{\pi}\left(\frac{X_c}{R_c} - \arctan\left(\frac{X_c}{R_c}\right)\right)\right) \right\}$$

qui correspond à maximiser la puissance définie ci-dessus. On note que le paramètre A peut être omis car il n'influence pas la solution optimale.

Puisque ce problème d'optimisation est non linéaire, il n'a pas de solution analytique close, mais peut être résolu numériquement. Hors ligne, les paramètres $R_c, X_c$ peuvent donc être calculés numériquement pour chaque fréquence dans l'intervalle d'intérêt, de manière à obtenir des courbes les reliant à la fréquence dominante de la force de la vague. Ces courbes sont interrogées en ligne pour obtenir les paramètres optimaux $R_c^o$, $X_c^o$ à partir de $\hat{\omega}_{ex}$, l'estimation de la fréquence dominante de la vague.

Les gains optimaux de la loi de commande PI sont alors calculés comme

$$\begin{cases} K_p^o = R_c^o \\ K_i^o = -\hat{\omega}_{ex} X_c^o \end{cases}$$

L'étape de commande proposée est schématisée de manière non limitative en figure 2. En entrée de cette étape de détermination de la valeur de commande, on a l'estimation de la fréquence dominante de la force d'excitation de la houle $\hat{\omega}_{ex}$ ainsi que les mesures de la vitesse v(t) et de la position p(t) du moyen mobile. Au moyen d'une courbe C1, qui est une courbe de résistance de charge optimale pouvant être obtenue hors ligne, et de la fréquence dominante de la force d'excitation de la houle $\hat{\omega}_{ex}$, on détermine la résistance de charge optimale $R_c^o$ qui correspond au coefficient proportionnel de la loi de commande PI $K_p^o$. En parallèle, au moyen d'une courbe C2, qui est une courbe de réactance de charge optimale pouvant être obtenue hors ligne, et de la fréquence dominante de la force d'excitation de la houle $\hat{\omega}_{ex}$, on détermine la réactance de charge optimale $X_c^o$. Le coefficient intégral de la loi de commande PI $K_i^o$ est obtenu en multipliant la réactance de charge optimale $X_c^c$ par la fréquence dominante de la force d'excitation de la houle $\hat{\omega}_{ex}$. Puis, la loi de commande $f_u(t)$ est obtenue par addition de la multiplication du coefficient proportionnel $K_p^o$ par la vitesse v(t) avec la multiplication du coefficient intégral $K_i^o$ par la position p(t).

Alternativement, on peut réaliser préalablement et hors ligne du procédé, la construction de courbes de coefficients $K_i$ et $K_p$ optimaux fonction de la fréquence dominante de la force de la houle, puis, en ligne, on détermine les coefficients $K_i$ et $K_p$ à partir de ces courbes et de la fréquence dominante exercée par la force de la houle. Ainsi, la loi de commande est complètement définie.

Selon le mode de réalisation pour lequel la loi de commande est une loi de commande PID, le coefficient variable Kd de la loi de commande peut être obtenu en utilisant l'estimation d'une deuxième fréquence dominante (par exemple avec modélisation de la houle avec deux sinusoïdes).

Etape 5) Commande de la machine de conversion

Lors de cette étape, on commande la machine de conversion en fonction de la valeur déterminée lors de l'étape précédente. Pour cela, on actionne la machine de conversion (machine électrique ou hydraulique) pour qu'elle reproduise la nouvelle valeur de la force $f_u$ telle que déterminée à l'étape 4.

Par exemple, on applique au système de commande de la machine électrique la nouvelle expression de la commande de la force $u$ qui permet d'obtenir une force $f_u$ exercée par la machine de conversion sur le moyen mobile. La commande de la machine électrique pour qu'elle applique la force $f_u$ correspondante, à la dynamique de la machine près, à la commande $u$ demandée, est effectuée en modifiant, le cas échéant, le courant électrique appliqué à la machine électrique. De manière plus détaillée, pour fournir un couple ou force qui entraîne le moyen mobile, on applique un courant en fournissant une puissance électrique. En revanche, pour produire un couple ou force qui résiste au mouvement du moyen mobile, on applique un courant en récupérant une puissance électrique.

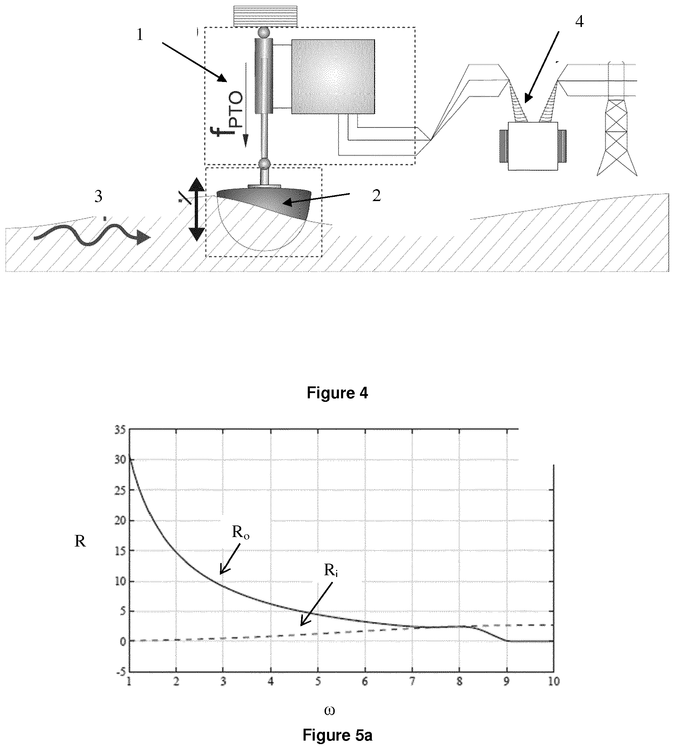

Un exemple non limitatif d'un système houlomoteur est une bouée oscillante telle que représentée sur la figure 4. Ce système houlomoteur comprend une bouée 2 en tant que moyen mobile de masse m, une machine de conversion 1 avec sa loi de commande, dont l'action f$_{PTO}$ peut être représentée par un amortissement d et une élasticité k. La bouée est soumise à un mouvement oscillatoire par les vagues 3 et par la force f$_{PTO}$ appliquée par la machine de conversion. La machine de conversion 1 peut être une machine électrique reliée à un réseau électrique 4.

Exemple d'application

Les caractéristiques et avantages du procédé selon l'invention apparaîtront plus clairement à la lecture de l'exemple d'application ci-après.

Pour cet exemple, on considère un flotteur tel que décrit en figure 4, et dont la dynamique force-vitesse (réponse en vitesse à la somme des forces appliquées au flotteur) est donnée par la fonction de transfert suivante :

$$Z_i(s) = \frac{s^6 + 208.6s^5 + 8.583 \cdot 10^4 s^4 + 8.899 \cdot 10^6 s^3 + 1.074 \cdot 10^8 s^2 + 7.031 \cdot 10^8 s}{1.44s^7 + 300.4s^6 + 1.237 \cdot 10^5 s^5 + 1.284 \cdot 10^7 s^4 + 1.652 \cdot 10^8 s^3 + 2.106 \cdot 10^9 s^2 + 9.988 \cdot 10^9 s + 6.539 \cdot 10^{10}}$$

La fonction de transfert décrit la dynamique d'un prototype à petite échelle (1:20) sur lequel le procédé a été appliqué.

Les paramètres de rendement de la machine de conversion pris en compte sont : $\eta_p = \eta_n = 0.7$. Avec ces paramètres et la fonction de transfert $Z_i(s)$ ci-dessus, on peut résoudre le problème d'optimisation suivant :

$$\min_{R_c, X_c} \left\{ -\frac{R_c}{(X_c + X_i)^2 + (R_c + R_i)^2} \left( \eta_p - \frac{\eta_n - \eta_p}{\pi} \left( \frac{X_c}{R_c} - \arctan\left( \frac{X_c}{R_c} \right) \right) \right) \right\}, \qquad R_c \geq 0$$

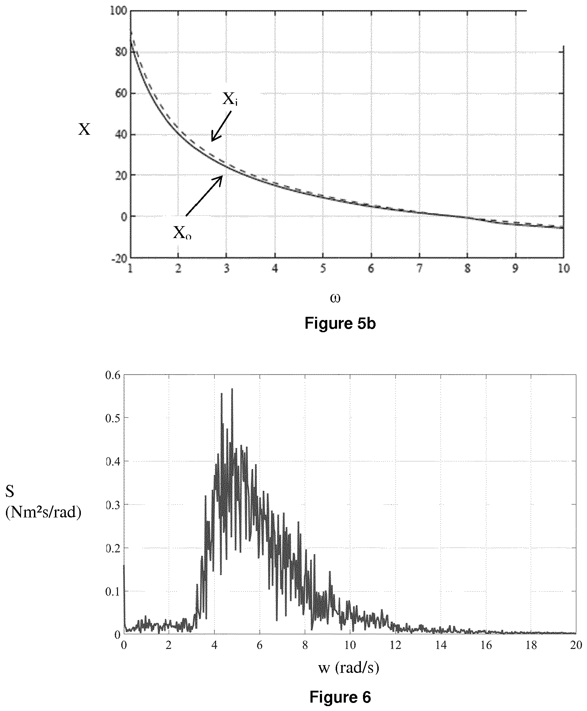

on obtient les deux courbes de résistance et réactance de charge optimales des figures 5a et 5b, qui sont utilisés dans le calcul en ligne des paramètres de la loi de commande PI.

La figure 5a illustre, en fonction de la fréquence $\omega$, la résistance optimale R$_o$ issue de l'optimisation précédente. Sur cette courbe est représentée en traits pointillés, la résistance intrinsèque Ri, et en trait continu la résistance optimale R$_o$.

La figure 5b illustre, en fonction de la fréquence $\omega$, la réactance optimale X$_o$ issue de l'optimisation précédente. Sur cette courbe est représentée en traits pointillés, la réactance intrinsèque Xi, et en trait continu la réactance optimale X$_o$.

Pour valider le procédé proposé, le système houlomoteur, piloté par le procédé de commande PI adaptatif selon l'invention, a été soumis à une série de vagues irrégulières de test. Le spectre S (Nm$^2$s/rad) de l'une de ces vagues, longue d'un peu plus que 1000 s et avec une fréquence dominante d'environ 5 rad/s, est représenté en figure 6.

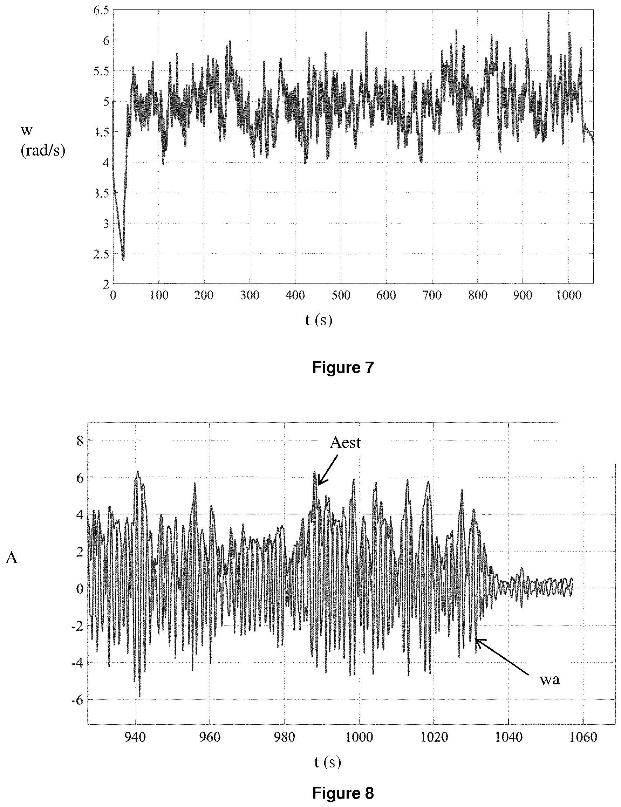

La bonne performance de l'étape d'estimation en ligne de la fréquence dominante de la force de la vague w (rad/s) en fonction du temps t(s) par le procédé de commande selon l'invention est montrée par la figure 7.

La figure 8 illustre l'amplitude A de la vague wa, et l'amplitude estimée Aest (en trait foncé) par le procédé de commande selon l'invention. Cette figure montre que l'algorithme UKF utilisé dans le procédé de commande selon l'invention pour estimer les paramètres du modèle sinusoïdal à paramètres variables de la force d'excitation de la vague est capable de gérer de fortes transitions (p.ex. vers t =1040 s dans la figure) tout en permettant d'obtenir des estimations stables de l'amplitude A(t) et de la fréquence dominante ω(t)), grâce à sa robustesse vis-à-vis des non linéarités. D'autres approches d'estimation, et en particulier l'EKF, ne seraient pas capables d'une pareille performance.

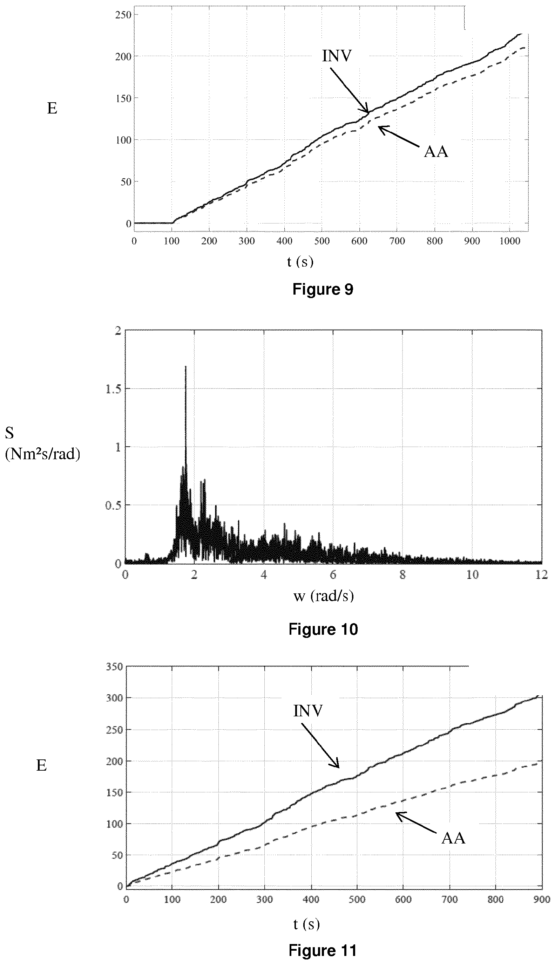

La Figure 9 illustre l'énergie récupérée par la commande PI adaptative selon l'invention INV, et par une commande PI non adaptative selon l'art antérieur AA. Il s'agit de l'énergie récupérée par la commande PI selon l'invention ou selon l'art antérieur à paramètres fixes sur une vague irrégulière. Ainsi, cette courbe compare les performances en récupération d'énergie sur la même vague de la loi de commande PI adaptative selon l'invention et d'un PI à paramètres fixes optimisés à partir des caractéristiques du spectre de l'état de mer, selon un état de l'art. On observe que la loi de commande PI selon l'invention permet même de récupérer plus d'énergie que dans une situation où des paramètres fixes selon l'art antérieur devraient suffire.

Un deuxième test a été effectué avec une vague irrégulière dont la fréquence dominante varie de manière linéaire entre la fréquence de la première vague testée (5 rad/s) et celle d'une vague de fréquence 1.8 rad/s. La figure 10 représente le spectre S (Nm$^2$s/rad) de la vague irrégulière en fonction de la fréquence w (rad).

La figure 11 est une courbe similaire à la courbe de la figure 9 pour la vague irrégulière dont le spectre est illustré en figure 10. Comme le montre la figure 11, le procédé selon l'invention INV permet dans ce cas de récupérer beaucoup plus d'énergie qu'une commande PI à paramètres fixes calibrée sur le premier spectre, selon un art antérieur.

Par conséquent, le procédé de commande selon l'invention, permet une commande en ligne qui optimise l'énergie récupérée.

**Revendications**

1. Procédé de commande d'un système houlomoteur qui convertit l'énergie de la houle en énergie électrique ou hydraulique, ledit système houlomoteur comportant au moins un moyen mobile en liaison avec une machine de conversion de l'énergie, et ledit moyen mobile effectuant un mouvement oscillatoire par rapport à ladite machine de conversion, **caractérisé en ce qu'**on réalise les étapes suivantes :

   a) on mesure la position et/ou la vitesse et/ou l'accélération dudit moyen mobile ;
   b) on estime la force exercée par la houle sur ledit moyen mobile au moyen de ladite mesure de ladite position et/ou de ladite vitesse dudit moyen mobile ;
   c) on détermine au moins une fréquence dominante de la force exercée par ladite houle sur ledit moyen mobile au moyen d'un filtre de Kalman non parfumé ;
   d) on détermine une valeur de commande de ladite force exercée par ladite machine de conversion sur ledit moyen mobile pour maximiser la puissance générée par ladite machine de conversion, au moyen d'une loi de commande proportionnelle intégrale PI à gains variables, dont les coefficients sont déterminés au moyen de ladite fréquence dominante de ladite force exercée par ladite houle sur ledit moyen mobile ; et
   e) on commande ladite machine de conversion au moyen de ladite valeur de commande.

2. Procédé selon la revendication 1, dans lequel on détermine le coefficient de proportionnalité Kp de ladite loi de commande PI au moyen d'une courbe de résistance de charge optimale à partir de ladite fréquence dominante de ladite force exercée par ladite houle sur ledit moyen mobile.

3. Procédé selon l'une des revendications précédentes, dans lequel on détermine le coefficient intégral Ki de ladite loi de commande PI au moyen d'une courbe de réactance de charge optimale à partir de ladite fréquence dominante de ladite force exercée par ladite houle sur ledit moyen mobile.

4. Procédé selon les revendications 2 et 3, dans lequel on détermine ladite résistance Rc de la charge optimale et ladite réactance Xc de charge optimale par résolution du problème d'optimisation suivant :

$$\min_{R_c, X_c} \left\{ -\frac{R_c}{(X_c+X_i)^2+(R_c+R_i)^2} \left( \eta_p - \frac{\eta_n - \eta_p}{\pi} \left( \frac{X_c}{R_c} - \arctan\left(\frac{X_c}{R_c}\right) \right) \right) \right\}$$

avec

**EP 3 601 781 B1**

$$\begin{cases} R_i(\omega) = B_{pa}(\omega) \\ X_i(\omega) = \omega \left( M + M_\infty + M_{pa}(\omega) - \dfrac{K_{pa}}{\omega^2} \right) \end{cases}$$

$\omega$ la fréquence d'excitation, $B_{pa}(\omega)$ la résistance à la radiation dudit moyen mobile, M la masse dudit moyen mobile, $M_{pa}(\omega)$ la masse ajoutée et $M_\infty$ masse ajoutée à l'infini dudit moyen mobile, $K_{pa}$ la raideur hydrostatique dudit moyen mobile, $\eta_p$ le rendement moteur de ladite machine de conversion, et $\eta_{pn}$ le rendement générateur de ladite machine de conversion.

5. Procédé selon l'une des revendications 2 à 4, dans lequel lesdites courbes de résistance de charge optimale et/ou de réactance de charge optimale sont déterminées préalablement à la mise en œuvre des étapes du procédé.

6. Procédé selon l'une des revendications précédentes, dans lequel on maximise ladite puissance générée par ladite machine de conversion en prenant en compte le rendement de ladite machine de conversion.

7. Procédé selon l'une des revendications précédentes, dans lequel ladite loi de commande PI s'écrit par une équation du type :
$f_u(t) = K_p v(t) + K_i p(t)$ avec $f_u(t)$ la commande de la force exercée par ladite machine de conversion sur ledit moyen mobile, v(t) la vitesse dudit moyen mobile, p(t) la position dudit moyen mobile, Kp le coefficient de proportionnalité de ladite loi de commande PI, et Ki le coefficient intégral de ladite loi de commande PI.

8. Procédé selon l'une des revendications 1 à 6, dans lequel ladite loi de commande est une loi de commande proportionnelle intégrale dérivée PID à gains variables.

9. Procédé selon la revendication 8, dans lequel ladite loi de commande proportionnelle intégrale dérivée PID s'écrit sous la forme :
$f_u(t) = K_p v(t) + K_i p(t) + K_d a(t)$ avec $f_u(t)$ la commande de la force exercée par la machine de conversion sur ledit moyen mobile, v(t) la vitesse dudit moyen mobile, p(t) la position dudit moyen mobile, a(t) l'accélération dudit moyen mobile, Kp le coefficient de proportionnalité de ladite loi de commande PID, Ki le coefficient intégral de ladite loi de commande PID, et Kd le coefficient dérivé de ladite loi de commande PID.

10. Procédé selon l'une des revendications précédentes, dans lequel on détermine la fréquence dominante de ladite force exercée par ladite houle sur ledit moyen mobile au moyen d'une modélisation de ladite force exercée par la houle sur ledit moyen mobile comme un signal sinusoïdal, ou comme la somme de deux signaux sinusoïdaux.

11. Procédé selon l'une des revendications précédentes, dans lequel on estime la position et/ou la vitesse dudit moyen mobile en utilisant un modèle dynamique qui représente l'évolution de la position et de la vitesse du moyen mobile.

12. Procédé selon la revendication 11, dans lequel ledit modèle dynamique comporte un modèle de la force de radiation.

13. Procédé selon l'une des revendications précédentes, dans lequel ladite machine de conversion est une machine électrique ou une machine hydraulique.

**Patentansprüche**

1. Verfahren zur Steuerung eines Wellenenergiesystems, das die Energie der Welle in elektrische oder hydraulische Energie umwandelt, wobei das Wellenenergiesystem mindestens eine bewegliche Einrichtung in Verbindung mit einer Umwandlungsmaschine der Energie aufweist, und die bewegliche Einrichtung eine Schwingbewegung bezüglich der Umwandlungsmaschine ausführt, **dadurch gekennzeichnet, dass** die folgenden Schritte durchgeführt werden:

   a) die Position und/oder die Geschwindigkeit und/oder die Beschleunigung der beweglichen Einrichtung werden gemessen;
   b) die von der Welle auf die bewegliche Einrichtung ausgeübte Kraft wird mittels der Messung der Position und/oder der Geschwindigkeit der beweglichen Einrichtung geschätzt;
   c) mindestens eine dominierende Frequenz der von der Welle auf die bewegliche Einrichtung ausgeübten Kraft wird mittels eines Unscented Kalman-Filters bestimmt;

d) ein Steuerwert der von der Umwandlungsmaschine auf die bewegliche Einrichtung ausgeübten Kraft wird bestimmt, um die von der Umwandlungsmaschine erzeugte Leistung mittels eines Proportional-Integral-Steuerungsgesetzes PI mit variablen Verstärkungen zu maximieren, dessen Koeffizienten mittels der dominierenden Frequenz der von der Welle auf die bewegliche Einrichtung ausgeübten Kraft bestimmt werden; und

e) die Umwandlungsmaschine wird mittels des Steuerwerts gesteuert.

2. Verfahren nach Anspruch 1, wobei der Proportionalitätskoeffizient Kp des Steuerungsgesetzes PI mittels einer optimalen Lastwiderstandskurve ausgehend von der dominierenden Frequenz der von der Welle auf die bewegliche Einrichtung ausgeübten Kraft bestimmt wird.

3. Verfahren nach einem der vorhergehenden Ansprüche, wobei der integrale Koeffizient Ki des Steuerungsgesetzes PI mittels einer optimalen Lastreaktanzkurve ausgehend von der dominierenden Frequenz der von der Welle auf die bewegliche Einrichtung ausgeübten Kraft bestimmt wird.

4. Verfahren nach den Ansprüchen 2 und 3, wobei der Widerstand Rc der optimalen Last und die Reaktanz Xc optimaler Last durch Auflösung des folgenden Optimierungsproblems bestimmt wird:

$$\min_{R_c,X_c}\left\{-\frac{R_c}{(X_c+X_i)^2+(R_c+R_i)^2}\left(\eta_p-\frac{\eta_n-\eta_p}{\pi}\left(\frac{X_c}{R_c}-\arctan\left(\frac{X_c}{R_c}\right)\right)\right)\right\} \texttt{ mit}$$

$$\begin{cases} R_i(\omega)=B_{pa}(\omega) \\ X_i(\omega)=\omega\left(M+M_\infty+M_{pa}(\omega)-\dfrac{K_{pa}}{\omega^2}\right) \end{cases}$$

$\omega$ der Anregungsfrequenz, $B_{pa}(\omega)$ dem Widerstand gegen die Strahlung der beweglichen Einrichtung, M der Masse der beweglichen Einrichtung, $M_{pa}(\omega)$ der hinzugefügten Masse und $M\infty$ der unendlich hinzugefügten Masse der beweglichen Einrichtung, $K_{pa}$ der hydrostatischen Steifheit der beweglichen Einrichtung, $\eta_p$ dem Motorwirkungsgrad der Umwandlungsmaschine und $\eta_{pn}$ dem Generatorwirkungsgrad der Umwandlungsmaschine.

5. Verfahren nach einem der Ansprüche 2 bis 4, wobei die optimalen Lastwiderstands- und/oder optimalen Lastreaktanzkurven vor der Durchführung der Schritte des Verfahrens bestimmt werden.

6. Verfahren nach einem der vorhergehenden Ansprüche, wobei die von der Umwandlungsmaschine erzeugte Leistung unter Berücksichtigung des Wirkungsgrads der Umwandlungsmaschine maximiert wird.

7. Verfahren nach einem der vorhergehenden Ansprüche, wobei das Steuerungsgesetz PI durch eine Gleichung des folgenden Typs geschrieben wird:
$f_u(t) = K_p v(t) + K_i p(t)$, mit $f_u(t)$ der Steuerung der von der Umwandlungsmaschine auf die bewegliche Einrichtung ausgeübten Kraft, $v(t)$ der Geschwindigkeit der beweglichen Einrichtung, $p(t)$ der Position der beweglichen Einrichtung, Kp dem Proportionalitätskoeffizienten des Steuerungsgesetzes PI, und Ki dem integralen Koeffizienten des Steuerungsgesetzes PI.

8. Verfahren nach einem der Ansprüche 1 bis 6, wobei das Steuerungsgesetz ein abgeleitetes Proportional-Integral-Steuerungsgesetz PID mit variablen Verstärkungen ist.

9. Verfahren nach Anspruch 8, wobei das abgeleitete Proportional-Integral-Steuerungsgesetz PID folgendermaßen geschrieben wird:
$f_u(t) = K_p v(t) + K_i p(t) + K_d a(t)$, mit $f_u(t)$ der Steuerung der von der Umwandlungsmaschine auf die bewegliche Einrichtung ausgeübten Kraft, $v(t)$ der Geschwindigkeit der beweglichen Einrichtung, $p(t)$ der Position der beweglichen Einrichtung, $a(t)$ der Beschleunigung der beweglichen Einrichtung, Kp dem Proportionalitätskoeffizienten des Steuerungsgesetzes PID, Ki dem integralen Koeffizienten des Steuerungsgesetzes PID und Kd dem abgeleiteten Koeffizienten des Steuerungsgesetzes PID.

10. Verfahren nach einem der vorhergehenden Ansprüche, wobei die dominierende Frequenz der von der Welle auf die bewegliche Einrichtung ausgeübten Kraft mittels einer Modellierung der von der Welle auf die bewegliche Einrichtung ausgeübten Kraft als ein sinusförmiges Signal oder als die Summe von zwei sinusförmigen Signalen bestimmt wird.

11. Verfahren nach einem der vorhergehenden Ansprüche, wobei die Position und/oder die Geschwindigkeit der beweglichen Einrichtung unter Verwendung eines dynamischen Modells geschätzt werden, das die Entwicklung der Position und der Geschwindigkeit der beweglichen Einrichtung darstellt.

12. Verfahren nach Anspruch 11, wobei das dynamische Modell ein Modell der Strahlungskraft aufweist.

13. Verfahren nach einem der vorhergehenden Ansprüche, wobei die Umwandlungsmaschine eine elektrische Maschine oder eine hydraulische Maschine ist.

**Claims**

1. Method for controlling a wave energy converter system which converts the energy of the waves into electrical or hydraulic energy, said wave energy converter system comprising at least one movable means linked with an energy conversion machine, and said movable means performing an oscillatory movement with respect to said conversion machine, **characterized in that** the following steps are performed:

   a) the position and/or the velocity and/or the acceleration of said movable means is/are measured;
   b) the force exerted by the waves on said movable means is estimated by means of said measurement of said position and/or of said velocity of said movable means;
   c) at least one dominant frequency of the force exerted by said waves on said movable means is determined by means of an unscented Kalman filter;
   d) a control value of said force exerted by said conversion machine on said movable means is determined to maximize the power generated by said conversion machine, by means of a proportional-integral PI control law with variable gains, whose coefficients are determined by means of said dominant frequency of said force exerted by said waves on said movable means; and
   e) said conversion machine is controlled by means of said control value.

2. Method according to Claim 1, wherein the coefficient of proportionality Kp of said PI control law is determined by means of an optimum load resistance curve from said dominant frequency of said force exerted by said waves on said movable means.

3. Method according to either of the preceding claims, wherein the integral coefficient Ki of said PI control law is determined by means of an optimum load reactance curve from said dominant frequency of said force exerted by said waves on said movable means.

4. Method according to Claims 2 and 3, wherein said optimum load resistance Rc and said optimum load reactance Xc are determined by resolving the following optimization problem:

$$\min_{R_c, X_c} \left\{ -\frac{R_c}{(X_c + X_i)^2 + (R_c + R_i)^2} \left( \eta_p - \frac{\eta_n - \eta_p}{\pi} \left( \frac{X_c}{R_c} - \arctan\left(\frac{X_c}{R_c}\right) \right) \right) \right\} \text{ with}$$

$$\begin{cases} R_i(\omega) = B_{pa}(\omega) \\ X_i(\omega) = \omega \left( M + M_\infty + M_{pa}(\omega) - \frac{K_{pa}}{\omega^2} \right) \end{cases}$$

$\omega$ the excitation frequency, $B_{pa}(\omega)$ the resistance to radiation of said movable means, M the weight of said movable means, $M_{pa}(\omega)$ the added weight and $M_\infty$ the endlessly added weight of said movable means, $K_{pa}$ the hydrostatic stiffness of said movable means, $\eta_p$ the motor efficiency of said conversion machine, and $\eta_{pn}$ the generating efficiency of said conversion machine.

5. Method according to one of Claims 2 to 4, wherein said optimum load resistance and/or optimum load reactance curves are determined prior to the implementation of the steps of the method.

6. Method according to one of the preceding claims, wherein said power generated by said conversion machine is maximized by taking into account the efficiency of said conversion machine.

7. Method according to one of the preceding claims, wherein said PI control law is written by an equation of the type: $f_u(t) = K_p v(t) + K_i p(t)$ with $f_u(t)$ the control of the force exerted by said conversion machine on said movable means, v(t) the velocity of said movable means, p(t) the position of said movable means, Kp the coefficient of proportionality of said PI control law, and Ki the integral coefficient of said PI control law.

8. Method according to one of Claims 1 to 6, wherein said control law is a proportional-integral-derivative PID control law with variable gains.

9. Method according to Claim 8, wherein said proportional-integral-derivative PID control law is written in the form: $f_u(t) = K_p V(t) + K_i p(t) + K_d a(t)$ with $f_u(t)$ the control of the force exerted by the conversion machine on said movable means, v(t) the velocity of said movable means, p(t) the position of said movable means, a(t) the acceleration of said movable means, Kp the coefficient of proportionality of said PID control law, Ki the integral coefficient of said PID control law, and Kd the derivative coefficient of said PID control law.

10. Method according to one of the preceding claims, wherein the dominant frequency of said force exerted by said waves on said movable means is determined by means of a modelling of said force exerted by the waves on said movable means as a sinusoidal signal, or as the sum of two sinusoidal signals.

11. Method according to one of the preceding claims, wherein the position and/or the velocity of said movable means is/are estimated by using a dynamic model which represents the trend of the position and of the velocity of said movable means.

12. Method according to Claim 11, wherein said dynamic model comprises a model of the radiation force.

13. Method according to one of the preceding claims, wherein said conversion machine is an electric machine or a hydraulic machine.

Figure 1

Figure 2

Figure 3

**Figure 4**

**Figure 5a**

Figure 5b

Figure 6

**Figure 7**

**Figure 8**

E

Figure 9

S
(Nm²s/rad)

w (rad/s)

Figure 10

E

t (s)

Figure 11

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2876751
- FR 2973448
- WO 2009081042 A
- WO 2012131186 A
- FR 1653109

**Littérature non-brevet citée dans la description**

- Control optimisation and parametric design. **RINGWOOD, J.V.** Numerical Modelling of Wave Energy Converters: State-of-the art techniques for single WEC and converter arrays. Elsevier, 2016
- **WHITTAKER, T. ; COLLIER, D. ; FOLLEY, M. ; OSTERRIED, M. ; HENRY, A. ; CROWLEY, M.** The development of Oyster-a shallow water surging wave energy converter. *Proceedings of the 7th European Wave and Tidal Energy Conference,* Septembre 2007, 11-14
- **HANSEN, RICO H ; KRAMER, MORTEN M.** Modelling and control of the Wavestar prototype. *Proceedings of 2011 European Wave and Tidal Energy Conférence,* 2011
- **HALS, J. ; FAINES, J. ; MOAN, T.** A Comparison of Selected Stratégies for Adaptive Control of Wave Energy Converters. *J. Offshore Mech. Arct. Eng.,* 2011, vol. 133.3